# EUROPEAN PATENT APPLICATION

(11) **EP 4 231 191 A1**
(43) Date of publication of application: **23.08.2023**
(21) Application number: 23153037.9
(22) Date of filing: 24.01.2023
(51) Int. Cl.: G06F 30/15, G06F 30/20

(54) **SYSTEM FOR THE DESIGN, REVIEW AND/OR PRESENTATION OF PROTOTYPE SOLUTIONS FOR VEHICLES, CORRESPONDING OPERATION METHOD AND COMPUTER PROGRAM PRODUCT**

(30) Priority: 16.02.2022 IT 202200002903
(71) Applicant: Granstudio S.p.A., 10154 Torino (IT)
(72) Inventor: VERMEERSCH, Lowie, I-10125 Torino (IT); VANDAMME, Wim, B-8470 Gistel (BE)
(74) Representative: Ferrero, Alberto

(57) **Abstract**

In a system (100) for the design, review and/or presentation of prototype solutions for vehicles are provided a plurality of hardware components of a vehicle's interior that are movable and/or adjustable to different positions via a plurality of respective actuators. A virtual or augmented reality headset (402) is configured to display to a user a virtual representation of a plurality of virtual components corresponding to the hardware components. A plurality of object detection sensors is configured to detect the position of one or more objects, the one or more objects including the headset (402) and/or the hands of the user. An electronic control system includes a driver unit, a control unit and a processing unit. The driver unit is coupled to the actuators to provide actuation commands thereto and/or receive position data therefrom, and is coupled to the plurality of object detection sensors to receive data indicative of the position of the one or more objects. The driver unit is configured to carry out sensor data fusion processing on the data indicative of the position of the one or more objects to determine the positions of the one or more objects relative to the headset (402). The control unit is coupled to the driver unit to send commands thereto and to receive feedback status and position data therefrom. The processing unit is configured to receive from the driver unit the positions of the one or more objects relative to the headset (402) and produce the virtual representation displayed by the headset as a function thereof.

## Description

### Field of the invention

The present description relates to a system for the design, development, review and/or presentation of design and/or prototype solutions for vehicles (e.g., including features of the vehicle's exterior and/or interior), wherein the system includes a plurality of adjustable physical devices (e.g., at least one floor, a pair of seats, a front head including a steering wheel) and an electronic system for the control and/or use thereof.

### State of the art

Systems as indicated above are known in the art, e.g., from International Patent Application (PCT Application) No. PCT/IB2021/058845, still unpublished at the time of filing of the instant application.

In particular, such a known system comprises a plurality of physical devices, an electronic control unit (e.g., a CPU) and a display and control device. The display and control device comprises at least one virtual reality display or augmented reality display that can be worn by a user. The physical supports are movable and adjustable by means of a plurality of respective actuators. The electronic control unit is configured to produce a digital representation or digital model of the prototype of a vehicle, and the position of the physical supports is correlated with the position of the corresponding digital supports in the digital model. The control unit is configured to carry out at least one of the following actions: actuating one or more of the actuators so as to adjust the positioning of the physical supports to defined positions, the defined positions being set by a user via the display and control device, and/or displaying, via the display and control device, a digital support in a position corresponding to the position of a respective physical support, the position of the physical support being set by actuating the actuators.

Providing a good matching between the positioning of the physical supports and the positioning of their digital representation in the digital model results in an improved user experience and allows the vehicle designer to take full advantage of the digital environment during the vehicle design phase, as well as the customers to accurately review and/or validate the design prototype without the need of resorting to a full-scale conventional mock-up vehicle.

Therefore, there is a need in the art to provide such known mixed physical/digital systems with improved matching between the physical and digital models.

### Summary of the invention

An object of one or more embodiments of the present description is that of providing such improved systems.

According to one or more embodiments, such an object can be achieved by a system having the features set forth in the claims that follow.

One or more embodiments may relate to a corresponding operation method.

One or more embodiments may relate to a corresponding computer program product loadable in the memory of at least one processing circuit (e.g., a MCU/CPU) and comprising software code portions for executing the acts of the method when the product is run on at least one processing circuit. As used herein, reference to such a computer program product is understood as being equivalent to reference to a computer-readable medium containing instructions for controlling the processing system in order to coordinate implementation of the method according to one or more embodiments. Reference to "at least one" processing circuit is intended to highlight the possibility for one or more embodiments to be implemented in modular and/or distributed form.

The claims are an integral part of the technical teaching provided herein in respect of the embodiments.

In one or more embodiments, a system for the design, review and/or presentation of prototype solutions for vehicles comprises a plurality of hardware components of a vehicle's interior, the hardware components being movable and/or adjustable to different positions via a plurality of respective actuators. The system comprises a virtual or augmented reality headset wearable by a user, the headset being configured to display to the user a virtual representation of a plurality of virtual components corresponding to the plurality of hardware components. The system comprises a plurality of object detection sensors configured to detect the position of one or more objects within a region of interest, the one or more objects including the headset and/or the hands of the user. The system comprises an electronic control system including a driver unit, a control unit and a processing unit. The driver unit is coupled to the actuators to provide actuation commands thereto, and/or to receive position data therefrom, and is coupled to the plurality of object detection sensors to receive data indicative of the position of the one or more objects within the region of interest. The driver unit is configured to carry out sensor data fusion processing on the data indicative of the position of the one or more objects to determine the positions of the one or more objects relative to the headset. The control unit is coupled to the driver unit to send commands thereto and to receive feedback status and position data therefrom. The processing unit is configured to receive, from the driver unit, the positions of the one or more objects relative to the headset and produce the virtual representation displayed by the headset as a function thereof.

One or more embodiments thus facilitate improving the accuracy in the matching of a physical vehicle mock-up and a corresponding virtual mock-up displayed to a user.

In one or more embodiments, the plurality of object detection sensors comprises at least one of an optical tracking device, preferably a 6-degree-of-freedom optical tracking device, an inertial measurement unit coupled to the headset, and a device configured to detect the position of the hands of the user.

In one or more embodiments, the plurality of object detection sensors comprises a set of optical sensors, an inertial measurement unit coupled to the headset, and one or more cameras. The driver unit is configured to determine a first position of the headset as a function of data from the optical sensors smoothed as a function of data from the inertial measurement unit, and determine a second position of the headset as a function of data from the one or more cameras. The driver unit is further configured to compare the first position of the headset to the second position of the headset to compute a positioning error of the headset, and subtract the positioning error from the determined positions of the one or more objects relative to the headset to produce corrected positions of the one or more objects relative to the headset. The processing unit is configured to produce the virtual representation displayed by the headset as a function of the corrected positions.

In one or more embodiments, the plurality of hardware components includes at least one of: a floor, at least one seat, a front head, a steering wheel mounted on the front head, at least one pedal arranged below the front head, and one or more armrests.

In one or more embodiments, the control unit is configured to receive from the user, via a user interface, a set of data indicative of expected positions of the actuators that move the hardware components, and transmit to the driver unit the data indicative of expected positions of the actuators. The driver unit is configured to provide actuation commands to the actuators to adjust the actuators to the expected positions.

In one or more embodiments, the control unit is configured to receive from the user, via a user interface, a set of data indicative of expected positions of the hardware components. The control unit is configured to determine, as a function of the data indicative of expected positions of the hardware components, a corresponding set of data indicative of expected positions of the actuators that move the hardware components, and transmit to the driver unit the data indicative of expected positions of the actuators. The driver unit is configured to provide actuation commands to the actuators to adjust the actuators to the expected positions.

In one or more embodiments, the control unit is configured to load from a data file a set of data indicative of expected positions of the actuators that move the hardware components, and transmit to the driver unit the data indicative of expected positions of the actuators. The driver unit is configured to provide actuation commands to the actuators to adjust the actuators to the expected positions.

In one or more embodiments, the control unit comprises a user interface, and is configured to show via the user interface an image representative of the current positions of the hardware components superposed to an image representative of the expected positions of the hardware components.

### Brief description of the drawings

The invention will now be described in detail with reference to the attached drawings, provided purely by way of non-limiting example, wherein:
- figure 1 is a front schematic perspective view exemplary of embodiments of the system according to the invention;
- figure 2 is a rear schematic perspective view exemplary of other embodiments of the system according to the invention;
- figure 3 is a block diagram exemplary of various components of a system according to the invention and its electronic control system;
- figure 4 is a schematic view exemplary of possible operation of the system according to the invention; and
- figure 5 is another schematic view exemplary of possible operation of the system according to the invention.

### Detailed description of the invention

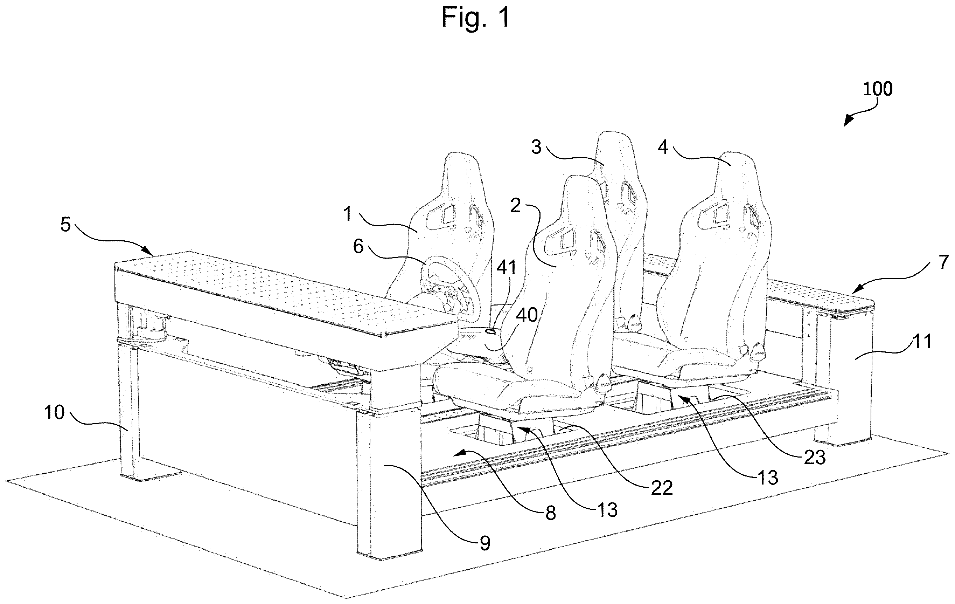

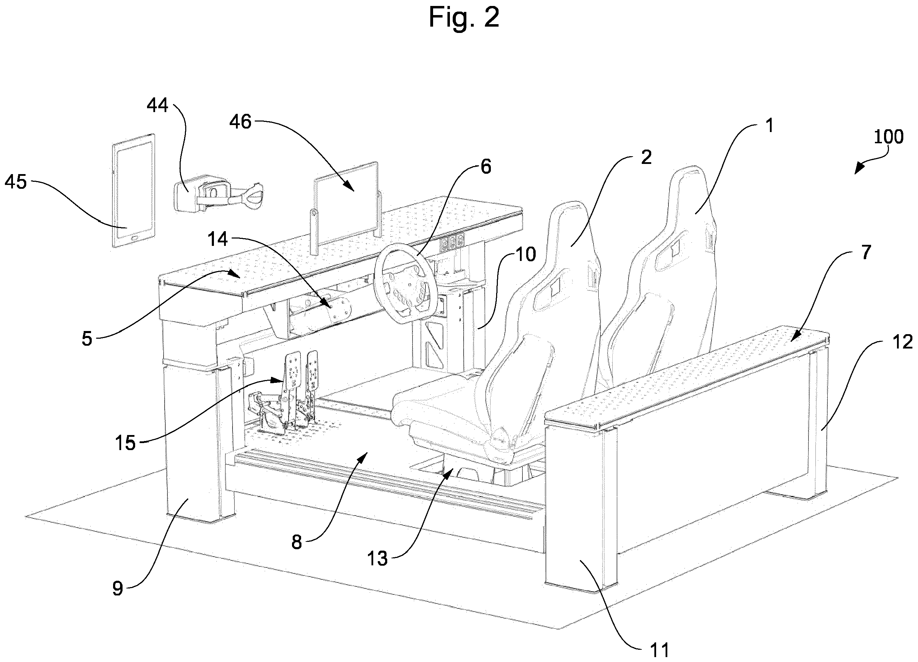

Figures 1 and 2 are exemplary of possible embodiments of a system 100 for integrating a physical environment and a virtual environment for the design, development, review and/or presentation of style prototypes of vehicles.

The physical environment of the system 100 of figure 1 comprises a floor 8 that can be moved vertically via one or more actuators. For instance, two pairs of actuators 9, 10, 11, 12 may be provided, arranged at the four corners of rectangular floor 8. The floor 8 is provided with a pair of front openings 22 for accommodating a pair of front seats 1, 2 and a pair of rear openings 23 for accommodating a pair of rear seats 3, 4. Each seat is provided with a respective electric movement and adjustment device 13 that allows moving the seats to different positions. The physical environment may further comprise a front head 5 that includes a steering wheel 6. The steering wheel 6 is also provided with a respective electric movement and adjustment device that allows moving and adjusting the position thereof. The physical environment may further comprise a rear head 7. The physical environment may further comprise one or more armrests 40 (e.g., arranged between each pair of seats, and/or laterally to each seat) provided with pressure sensors 41, suitable to provide ergonomic feedback to the electronic control system of the system.

Figure 2 shows another embodiment of a system 100 for integrating a physical environment and a virtual environment for the design of style prototypes of vehicles. Parts identical or similar to those already described are indicated with the same reference numerals. The system 100 of figure 2 comprises only a pair of seats 1, 2. Furthermore, figure 2 shows a pair of automotive pedals 15 arranged below the front head 5 (e.g., in line with the steering wheel 6) whose position can also be adjusted via a respective actuator, an actuator 14 for moving and adjusting the position of the steering wheel 6, a screen 46 arranged on the front head 5, a virtual reality visor or augmented reality visor 44 and an electronic control device (e.g., a tablet) 45. It will be understood that, even if not illustrated in figure 1, any embodiment of the present invention may include pedals 15, actuator 14, screen 46, virtual reality visor or augmented reality visor 44, and control device 45.

Each of the seats 1, 2, 3, 4 can be moved and adjusted along three orthogonal axes X, Y, Z as disclosed in the international patent application previously cited. Movement of the seats 1, 2, 3, 4 - as well as of any other movable part of the physical environment, such as pedals 15, steering wheel 6 and/or armrests 40 - is controlled by the electronic control system, as further disclosed in the following.

Embodiments of the design/development framework described with reference to figures 1 and 2 can be used in at least two operating modes.

In a first operating mode, suitable for example for the presentation of a new car model, a user (e.g., a car designer) may impart commands (via the electronic control system) to set positions of the aforementioned mobile physical devices (e.g., seats, pedals, steering wheel, armrests, etc.) according to a certain layout of a vehicle. For instance, the user may impart commands via the computer or tablet 45. Contextually, a potential customer can simultaneously view the design prototype using, for example, the virtual/augmented reality visor 44, as well as test the ergonomics and/or functionality of the controls and commands of the "mock-up" vehicle using the physical environment where the physical devices have been positioned correspondingly.

In a second operating mode, the design/development framework disclosed herein allows a designer to view a certain configuration of the physical elements of a vehicle being designed, for example using the virtual/augmented reality visor 44, and simultaneously test the ergonomics and style thereof so that, if necessary, the designer can modify them in real time using, for example, the computer or tablet 45.

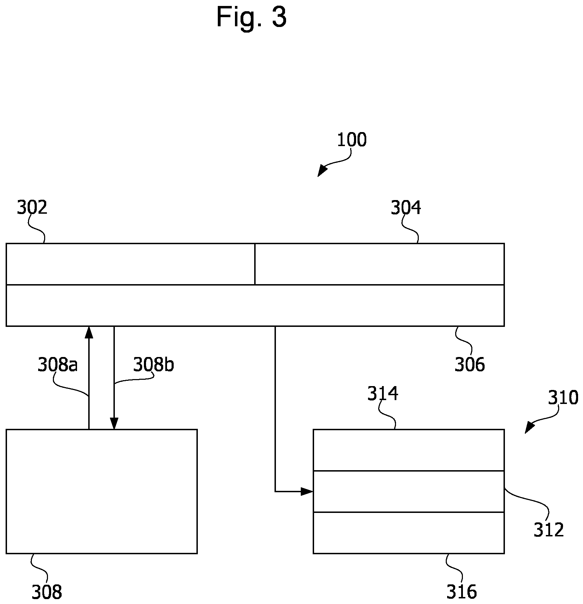

Figure 3 is a block diagram that exemplifies certain hardware and software components of a system 100 according to one or more embodiments.

The system 100 comprises hardware components 302 of the "physical" design environment, e.g., the hardware components described substantially with reference to figures 1 and 2. Additionally, the system 100 comprises one or more position detecting and/or motion tracking devices 304 configured to detect and/or track the position of objects within the space of the physical design environment. For instance, devices 304 may include one or more optical tracking devices such as 6-degree-of-freedom (6DOF) tracking devices, one or more inertial measurement units (IMU), one or more devices configured to detect/track the position of the hands of a user, etc. Additionally, the system 100 comprises an electronic driver unit 306 that interfaces with the hardware components 302 (e.g., with the actuators of the movable seats, steering wheel, pedals, armrests, etc.) and with the detection/tracking devices 304. In particular, the driver unit 306 may send motion commands to the actuators, may receive position data (e.g., feedback data) from the actuators, and/or may receive position data from the devices 304. The driver unit 306 additionally carries out fusion of sensor data coming from the actuators and the devices 304, as further disclosed in the following.

The system 100 further comprises a remote electronic control unit 308 (e.g., a computer or a workstation) configured to control the positions of the physical components 302 as further discussed in the following. The control unit 308 is coupled to the driver unit 306 to send commands thereto and to receive data therefrom. For instance, the control unit 308 may send commands 308a to the driver unit 306 such as a turn on or turn off command, an actuation command (e.g., "steering wheel: set angle to 45°"), and the like. Additionally, the control unit 308 may receive state information 308b from the driver unit 306 such as a current status information (e.g., "on", "off", "error status", "currently moving", etc.) and a pose information from one or more of the actuators (e.g., "steering wheel: current angle 35.82°").

The system 100 further comprises a processing unit 310 configured to receive the fused sensor data from the driver unit 306 and synchronize the detected positions of the physical components 302 and of a user with the positions of corresponding digital components displayed in the virtual/augmented reality visor 44. In particular, the processing unit 310 may run a software code including a plug-in part 312, a content part 314 (e.g., an interactive car model) and a graphic engine part 316 (e.g., a game engine). The plug-in part 312 may receive data from the driver unit 306 such as the current status of the hardware mock-up, and the position of the physical elements that interact in the hardware mock-up (e.g., the positions of the hardware components 302, the position and orientation of the user's headset such as visor 44, the position and orientation of the user's hand, and the like).

The actuators in the physical environment of the system 100 (e.g., the motors that move the hardware components 302) are able to detect their own state. For instance, a linear motor may be able to detect its current position with respect to its full-scale (e.g.: motor n°1, current position = 25 mm, full-scale range = 400 mm). Using position data coming from the actuators, the driver unit 306 is configured to compute an overall pose of the physical mock-up. However, such a pose may lack information about the position and orientation of the whole structure. Therefore, one or more embodiments may use optical tracking and/or inertial tracking to detect the relative position between the physical mock-up and a user sitting in the mock-up. Additionally, the end user's head pose (e.g., position and orientation in space) can be detected as well.

As anticipated, the driver unit 306 is configured to perform sensor data fusion. The ability of correctly fusing data coming from different sources (e.g., optical and IMU tracking), running at different frequencies and with different accuracies is a desirable feature. Provision of a good (e.g., reliable) data fusion model, specific to the use-case and its constraints, is therefore advantageous. Generally, optical tracking can be used to detect absolute position and orientation of a user at a low frequency, but can be jittery. Filtering the jitter may induce lag, which is not suitable for use of a head-mounted device (HMD) such as the virtual/augmented reality visor 44. On the other hand, sensors based on inertial measurement units can produce smooth relative position and orientation data at a high frequency, but may drift over time. One or more embodiments may thus rely on the advantageous combination of the two data types to provide satisfactory results. Additionally, the tracking of the user's hand (e.g., again via optical sensing such as Leap Motion) can also be integrated in the sensor fusion model.

As anticipated, the control unit 308 is configured to control the positions of the hardware components 302. This may be implemented in a user-friendly manner, e.g., so that a user can easily set the physical mock-up in a desired configuration without having to manually set each and every position of the actuators' motors. The control unit 308 may offer, for instance, a remote user interface and three different control modes.

In a first control mode (e.g., "manual"), the user may set each actuator in a desired state (e.g., "set motor n°1 to position 15 mm out of 400 mm).

In a second control mode (e.g., "ergonomics"), the user may set the positions of the hardware components 302, with the control unit 308 being configured to correlate the desired final positions with the corresponding actuators states. For instance, the user may set the steering wheel at a certain angle with respect to the horizontal (e.g., "set steering wheel angle to 70°"), and the control unit 308 may determine the positions of one or more actuators of the steering wheel that result in the desired outcome. Some mathematics is used to convert back and forth between ergonomics values and motor values.

In a third control mode (e.g., "storage"), data defining the states (positions) of the actuators and/or the positions of the hardware components 302 can be loaded from a file. The possibility of saving and retrieving such position data may facilitate the work of a development team, by allowing multiple users to store different configurations and/or work on a commonly shared project.

When using the control unit 308, the user may set a pose for the physical mock-up (using any of the three modes described above) and confirm via the remote user interface, which results in the control unit 308 sending motion commands to the actuators of the physical components 302. In the user interface, two superposed images may be displayed: a first one (e.g., a "ghost" or "translucent" image) may show the current actual pose of the physical mock-up, while a second one (e.g., a "solid" image) may show the target pose of the physical mock-up.

As anticipated, the processing unit 310 is configured to receive the fused sensor data from the driver unit 306 and synchronize the detected positions of the physical components 302 and of a user with the positions of corresponding digital components displayed in a virtual environment such as the virtual/augmented reality visor 44. For instance, the plug-in part 312 may be configured to integrate the data coming from the driver unit 306 in a graphic engine such as, for instance, Unreal Engine. The purpose of the plug-in part 312 is to match the 3D virtual model of the vehicle being reviewed/designed with the actual positions of the physical components 302. For example, a user physically seated in the physical mock-up and wearing a head-mounted visor 44 should be able to touch the steering wheel 6, the armrests 40, the display 46, etc. in the "virtual" world and in the "real" world at the same time.

In order to provide synchronization between the physical mock-up and the virtual environment presented to a user, the virtual mock-up (e.g., a "blue ghost") should be matched with a 3D model of the vehicle being worked on in the graphic engine (e.g., Unreal). The virtual mock-up can either be connected to the driver unit 306 to update its pose in real time, or a configuration file made via the control unit 308 can be loaded, or the user can define the pose directly in the virtual environment and send it back to the driver unit 306 (e.g., bypassing the control unit 308). When displaying the virtual mock-up in the virtual environment (e.g., with the user wearing a virtual/augmented reality headset), the virtual mock-up and physical mock-up will be aligned. Additionally, virtual hands can be visualized in the virtual environment, and their position can be matched with the position of other virtually-displayed elements (e.g., a virtual steering wheel).

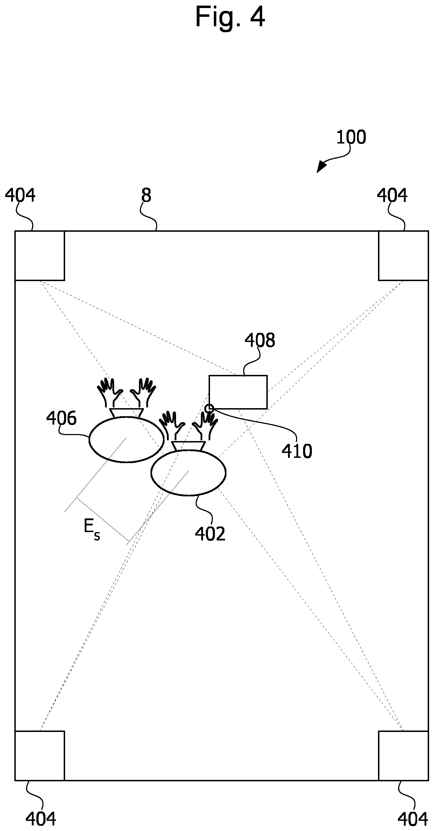

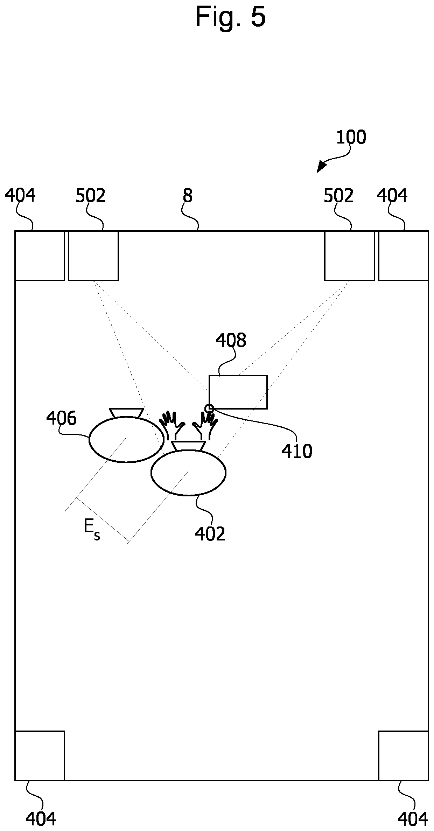

One or more embodiments may rely on a sensor fusion algorithm that improves accuracy and matching between the physical mock-up and the virtual environment presented to a user. To this regard, reference may be had to figures 4 and 5.

In standard virtual reality systems (e.g., commercial systems known as Oculus, HTC Vive, and the like), estimation of the position in space of the headset (e.g., virtual/augmented reality visor 44) is mainly based on data received from IMU sensors. However, IMU sensors may generate a non-constant error, i.e., the position of the virtual objects visualized in the virtual environment may drift over time compared to the actual position of those same objects in the physical world. An error in the positioning of virtual objects in the virtual environment results in perception errors (e.g., incorrect tactile feedback of the user) with the physical environment. Also, commercial systems like to ones cited above may also couple their IMU data with other data (e.g., coming from cameras or lighthouses) and use sensor fusion. However, such commercial sensor fusion algorithms are conventionally designed to be smooth, not accurate, and may not be capable of tracking a plurality of objects. For instance, the system commercially known as Oculus cannot track more than one object. Another commercially known system known as HTC Vive can use an additional device known as "Vive tracker", which however is not precise, is even unreliable for static objects (like the static structure of the physical part of system 100, which needs to be tracked), is cumbersome and is an active device that needs to be powered and connected wirelessly with a dongle.

As exemplified in figure 4, in a conventional VR/AR system, the position and/or orientation of a head-mount device (HMD) 402 such as visor 44 may be tracked by one or more optical base stations 404 (e.g., arranged at the four corners of floor 8). The tracked position of head-mount device 402 is used to generate visual information for the eyes of the user, so the position data is conventionally smoothed using IMU data, causing an error (e.g., drift error). This is represented in figure 4, where device 402 represents the real physical location of a user wearing a head-mount device, and device 406 represents the corresponding smoothed position. A positioning error or smoothing error E_{S} may thus be generated. In the physical environment, there are provided other objects 408 (e.g., one or more of the hardware components 302), whose position is also tracked by optical base stations 404. There is no need for smoothing the position of objects 408, as these objects are not attached to the user (e.g., not attached to its head) and therefore are not expected to move. As a result, the position of objects 408 as presented in the virtual environment (VR/AR visor 44) will be equal or very close to the actual position of objects 408 in physical world. The position of one or more other objects (e.g., the hands of the user) may be tracked relative to the position of the device 402, so that also the position of these additional objects in the virtual environment will be affected by the smoothing error E_{S}, compared to the actual physical position.

As a result, if a conventional AR/VR system were to be used, a positioning mismatch may lead to the user being unable to match their visual feedback (coming from the VR/AR headset 44) with their tactile feedback (coming from the physical components 302 around the user). For instance, the user's hand may touch a tracked object 408 in the physical environment (as exemplified by dot 410 in figure 4), while the "virtual" hands shown by the headset 44 may not be displayed as touching the virtual representation of object 408. In practice, the smoothing error E_{S} affecting only some of the virtually displayed devices may result in the user's visual perception being different from the user's haptic (tactile) perception. Known solutions aim at keeping the error caused by the smoothing as small as possible, resulting in a tradeoff between the achievable level of smoothing and the residual error, and/or the need to use a highly accurate IMU sensor and/or implement a custom sensor fusion algorithm.

One or more embodiments as exemplified in figure 5 may thus provide a simple solution that provides improved smoothing experience and high accuracy. The system 100 may further comprise one or more additional cameras 502 configured to independently detect/track the position of the head-mount device 402 (e.g., by exchanging data with the driver unit 306). The smoothed position data from the headset 402 is not replaced: it is compared to the position data determined via the cameras 502 so as to determine (e.g., measure) the smoothing error E_{S} at each point in time. The measured smoothing error can thus be subtracted from the positions of all objects that are positioned relative to the head-mount device 402, resulting in the hands being virtually placed at the place where they physically are, so that the visual information given to the user via the AR/VR headset 44 matches the haptic (tactile) feedback that the user gets from the physical components 302 of the system.

Obviously, the construction details and the embodiments may widely vary with respect to what has been described and illustrated, without departing from the scope of protection of the present invention as defined in the claims that follow. Thus, for example, the general configuration of the seats, the steering wheel and the pedals could be different from the one shown in the drawings, and be adapted to different car models.

## Claims

1. A system (100) for the design, review and/or presentation of prototype solutions for vehicles, the system (100) comprising:
- a plurality of hardware components (302) of a vehicle's interior, the hardware components (302) being movable and/or adjustable to different positions via a plurality of respective actuators,
- a virtual or augmented reality headset (44; 402) wearable by a user, the headset (44; 402) being configured to display to the user a virtual representation of a plurality of virtual components corresponding to said plurality of hardware components (302),
- a plurality of object detection sensors (304) configured to detect the position of one or more objects within a region of interest, said one or more objects including said headset (44; 402) and/or the hands of said user; and
- an electronic control system (306, 308, 310) including a driver unit (306), a control unit (308) and a processing unit (310);
wherein said driver unit (306) is coupled to said actuators to provide actuation commands thereto, and/or to receive position data therefrom, and is coupled to said plurality of object detection sensors (304) to receive data indicative of said position of said one or more objects within said region of interest,
wherein said driver unit (306) is configured to carry out sensor data fusion processing on said data indicative of said position of said one or more objects to determine the positions of said one or more objects relative to said headset (44; 402);
wherein said control unit (308) is coupled to said driver unit (306) to send commands thereto and to receive feedback status and position data therefrom;
and wherein said processing unit (310) is configured to receive from said driver unit (306) said positions of said one or more objects relative to said headset (44; 402) and produce said virtual representation displayed by said headset (44; 402) as a function thereof.

2. The system (100) of claim 1, wherein said plurality of object detection sensors (304) comprises at least one of:
- an optical tracking device, preferably a 6-degree-of-freedom optical tracking device;
- an inertial measurement unit coupled to said headset (44; 402); and
- a device configured to detect the position of the hands of the user.

3. The system (100) of claim 1 or claim 2, wherein said plurality of object detection sensors (304) comprises a set of optical sensors (404), an inertial measurement unit coupled to said headset (44; 402) and one or more cameras (502);
wherein said driver unit (306) is configured to:
- determine a first position of said headset (44; 402) as a function of data from said optical sensors (404) smoothed as a function of data from said inertial measurement unit, and determine a second position of said headset (44; 402) as a function of data from said one or more cameras (502);
- compare said first position of said headset (44; 402) to said second position of said headset (44; 402) to compute a positioning error (E_{S}) of said headset (44; 402); and
- subtract said positioning error (E_{S}) from said determined positions of said one or more objects relative to said headset (44; 402) to produce corrected positions of said one or more objects relative to said headset (44; 402),
and wherein said processing unit (310) is configured to produce said virtual representation displayed by said headset (44; 402) as a function of said corrected positions.

4. The system (100) of any of the previous claims, wherein said plurality of hardware components (302) includes at least one of: a floor (8), at least one seat (1, 2), a front head (5), a steering wheel (6) mounted on the front head (5), at least one pedal (15) arranged below said front head (5), and one or more armrests (40) .

5. The system (100) of any of the previous claims, wherein said control unit (308) is configured to:
- receive from the user, via a user interface, a set of data indicative of expected positions of said actuators that move said hardware components (302); and
- transmit to said driver unit (306) said data indicative of expected positions of said actuators,
and wherein said driver unit (306) is configured to provide actuation commands to said actuators to adjust said actuators to said expected positions.

6. The system (100) of any of the previous claims, wherein said control unit (308) is configured to:
- receive from the user, via a user interface, a set of data indicative of expected positions of said hardware components (302);
- determine, as a function of said data indicative of expected positions of said hardware components (302), a corresponding set of data indicative of expected positions of said actuators that move said hardware components (302); and
- transmit to said driver unit (306) said data indicative of expected positions of said actuators,
and wherein said driver unit (306) is configured to provide actuation commands to said actuators to adjust said actuators to said expected positions.

7. The system (100) of any of the previous claims, wherein said control unit (308) is configured to:
- load from a data file a set of data indicative of expected positions of said actuators that move said hardware components (302); and
- transmit to said driver unit (306) said data indicative of expected positions of said actuators,
and wherein said driver unit (306) is configured to provide actuation commands to said actuators to adjust said actuators to said expected positions.

8. The system (100) of any of the previous claims, wherein said control unit (308) comprises a user interface, and is configured to show via said user interface an image representative of the current positions of said hardware components (302) superposed to an image representative of the expected positions of said hardware components (302).

9. A method of operating a system (100) according to any of the previous claims, the method comprising:
- moving and/or adjusting to different positions said plurality of hardware components (302) of a vehicle's interior via a plurality of respective actuators,
- detecting, via said plurality of object detection sensors (304), the position of one or more objects within a region of interest, said one or more objects including said headset (44; 402) and/or the hands of a user;
- displaying to the user, via said virtual or augmented reality headset (44; 402), a virtual representation of a plurality of virtual components corresponding to said plurality of hardware components (302),
- providing actuation commands to said actuators, and/or receiving position data therefrom, and receiving data indicative of said position of said one or more objects within said region of interest,
- carrying out sensor data fusion processing on said data indicative of said position of said one or more objects to determine the positions of said one or more objects relative to said headset (44; 402);
- sending commands to said driver unit (306) and receiving feedback status and position data from said driver unit (306);
- receiving from said driver unit (306) said positions of said one or more objects relative to said headset (44; 402) and producing said virtual representation displayed by said headset (44; 402) as a function thereof.

10. A computer program product, loadable in the memory of at least one computer and including software code portions which, when executed by the computer, cause the computer to carry out the steps of a method according to claim 9.
